# EUROPEAN PATENT APPLICATION

(11) **EP 4 838 347 A1**
(43) Date of publication of application: **11.11.2026**
(21) Application number: 24915078.0
(22) Date of filing: 10.12.2024
(51) Int. Cl.: G06F 3/04845

(54) **INTERACTION CONTROL METHOD AND APPARATUS, DEVICE, AND STORAGE MEDIUM**

(30) Priority: 05.01.2024 CN 202410022300
(71) Applicant: Beijing Zitiao Network Technology Co., Ltd., Beijing 100190 (CN)
(72) Inventor: RAN, Ran, Beijing 100028 (CN); ZHU, Min, Beijing 100028 (CN)
(74) Representative: Marks & Clerk LLP
(86) International application number: PCT/CN2024/138078
(87) International publication number: WO 2025/145863

(57) **Abstract**

According to embodiments of the disclosure, an interaction control method, an apparatus, a device, and a storage medium are provided. The method includes presenting, in a target interface, a set of controls associated with a target object; determining, based on direction information associated with a received touch input, an activated target control among a plurality of controls in the set of controls in response to a touch position of the touch input being within a common control region of the plurality of controls, where the control region indicates a range for controlling a corresponding control; and performing, based on the touch input, a first operation corresponding to the target control on the target object. In this way, misoperation on the controls caused by the overlap of control regions of the controls may be effectively avoided, and the efficiency of image editing may be effectively improved.

## Description

The present application claims priority to Chinese Patent Application No. 202410022300.3, filed on January 05, 2024 and entitled "INTERACTION CONTROL METHOD, APPARATUS, DEVICE, AND STORAGE MEDIUM", which is incorporated herein by reference in its entirety.

### TECHNICAL FIELD

Example embodiments of the present disclosure generally relate to the field of computers, and in particular, to an interaction control method, an apparatus, a device, and a computer-readable storage medium.

### BACKGROUND

With the development of image technologies, users' requirements for interaction control are increasing. For example, users expect to edit images with portable devices such as smart phones or tablet computers. For example, users expect to add specific layers to an image or perform operations such as cropping and/or zooming on the image. This raises higher requirements for the accuracy and flexibility of interaction control in the process of image editing.

### SUMMARY

In a first aspect of the present disclosure, a method for interaction control is provided. The method includes presenting, in a target interface, a set of controls associated with a target object; determining, based on direction information associated with a received touch input, an activated target control among a plurality of controls in the set of controls in response to a touch position of the touch input being within a common control region of the plurality of controls, where the control region indicates a range for controlling a corresponding control; and performing, based on the touch input, a first operation corresponding to the target control on the target object.

In a second aspect of the present disclosure, an apparatus for interaction control is provided. The apparatus includes a presenting module configured to present, in a target interface, a set of controls associated with a target object; a target control determining module configured to determine, based on direction information associated with a received touch input, an activated target control among a plurality of controls in the set of controls in response to a touch position of the touch input being within a common control region of the plurality of controls, where the control region indicates a range for controlling a corresponding control; and a first operation performing module configured to perform, based on the touch input, a first operation corresponding to the target control on the target object.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer-readable storage medium is provided. The medium has a computer program stored thereon, when being executed by a processor, the computer program implements the method of the first aspect.

In a fifth aspect of the present disclosure, a computer program product is provided. The computer program product includes computer-executable instructions, wherein when being executed by a processor, the computer-executable instructions implement the method according to the first aspect of the present disclosure.

It should be understood that the content described in the Summary of the present disclosure is neither intended to define the key or important features of the embodiments of the present disclosure, nor is it intended to limit the scope of the present disclosure. Other features of the present disclosure would be readily understood from the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 illustrates a schematic diagram of an example environment in which the embodiments of the present disclosure may be implemented;
FIGS. 2A to 2C illustrate schematic diagrams of layer editing according to some embodiments of the present disclosure;
FIGS. 3A and 3B illustrate schematic diagrams of a process of interaction control according to some embodiments of the present disclosure;
FIG. 4 illustrates a schematic diagram of layer editing according to some embodiments of the present disclosure;
FIG. 5 illustrates a schematic diagram of a process of interaction control according to another embodiment of the present disclosure;
FIGS. 6A and 6B illustrate schematic diagrams of layer editing according to some embodiments of the present disclosure;
FIG. 7 illustrates a schematic diagram of a process of interaction control according to yet another embodiment of the present disclosure;
FIG. 8 illustrates a flowchart of a process of interaction control according to some embodiments of the present disclosure;
FIG. 9 illustrates a block diagram of an interaction control apparatus according to some embodiments of the present disclosure; and
FIG. 10 illustrates a block diagram of a device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it would be appreciated that the present disclosure may be implemented in various forms and should not be construed as limited to the embodiments set forth herein; on the contrary, these embodiments are provided for a more thorough and complete understanding of the present disclosure. It would be appreciated that the drawings and embodiments of the present disclosure are only for illustrative purposes, and are not intended to limit the protection scope of the present disclosure.

In the description of the embodiments of the present disclosure, the term "include/comprise" and similar terms thereto should be construed as open-ended inclusions, that is, "include/comprise but not limited to". The term "based on" should be construed as "based at least in part on". The term "one embodiment" or "the embodiment" should be construed as "at least one embodiment". The term "some embodiments" should be construed as "at least some embodiments". Other definitions, either explicit or implicit, may also be included below.

It may be understood that the image data involved in the technical solution (including but not limited to the data itself, acquisition, use, storage or deletion of the data) should comply with requirements of corresponding laws, regulations and related provisions.

It may be understood that before using the technical solution disclosed in the embodiments of the present disclosure, the user should be informed of the type, range of use, use scenarios, etc. of the data involved in the present disclosure in an appropriate manner in accordance with relevant laws and regulations, and the authorization of the user should be obtained. The user may include any type of subject of rights, such as an individual, an enterprise, or a group.

As mentioned above, users expect to edit images by interacting with portable devices such as smart phones or tablet computers, for example, add specific layers to an image or perform operations such as cropping and/or zooming on the image. When users interact with portable devices to edit images, for example, when zooming in or out of a layer, due to the small interaction area, when the layer is zoomed out to a certain extent, component controls for controlling the zooming of the layer may be hidden, or the control regions of these controls may overlap, making it difficult for users to perform further layer editing operations, thus affecting the accuracy and convenience of interaction.

The technical solution of the present disclosure provides an interaction control solution. According to the interaction control solution of the embodiments of the present disclosure, a set of controls associated with a target object is presented in a target interface. If a touch position of a received touch input is within a common control region of a plurality of controls in the set of controls, an activated target control is determined from the plurality of controls based on direction information associated with the touch input. The control region indicates a range for controlling a corresponding control. A first operation corresponding to the target control is performed on the target object based on the touch input. In this way, misoperation on the controls caused by the overlap of control regions of the controls may be effectively avoided, and the efficiency of image editing may be effectively improved.

### Example Environment

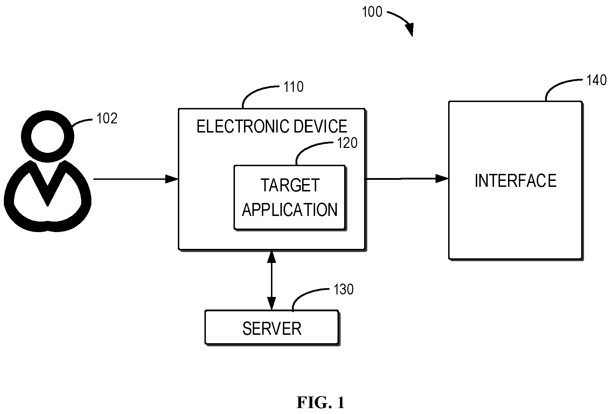

Referring first to FIG. 1, it schematically illustrates a schematic diagram of an example environment 100 in which an illustrative implementation according to the present disclosure may be implemented.

FIG. 1 illustrates a schematic diagram of an example environment 100 in which the embodiments of the present disclosure may be implemented. In this example environment 100, a target application 120 is installed in an electronic device 110. A user 102 may interact with the target application 120 via the electronic device 110 and/or an attachment device of the electronic device 110. The target application 120 may be an application capable of providing the user 102 with a service related to media content, including creation (for example, shooting and/or editing), publishing, browsing, etc. of the media content. As used herein, "media content" may be various forms of content, including video, audio, image, image set, text, etc.

In the environment 100 of FIG. 1, if the target application 120 is in an active state, the electronic device 110 may present an interface 140 of the target application 120 to the user 102. The interface 140 may be various types of pages that may be provided by the target application 120, such as a presentation page of media content, a content creation page, a content editing page, etc.

In some embodiments, the electronic device 110 communicates with a server 130 to implement the provision of services of the target application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the electronic device 110 may also support any type of user-specific interface (such as "wearable" circuitry, etc.). The server 130 is various types of computing systems/servers capable of providing computing power, including but not limited to mainframes, edge computing nodes, computing devices in cloud environments, etc.

It would be appreciated that the structure and function of the environment 100 are described for illustrative purposes only, without suggesting any limitation to the scope of the present disclosure.

### Process of Interaction Control

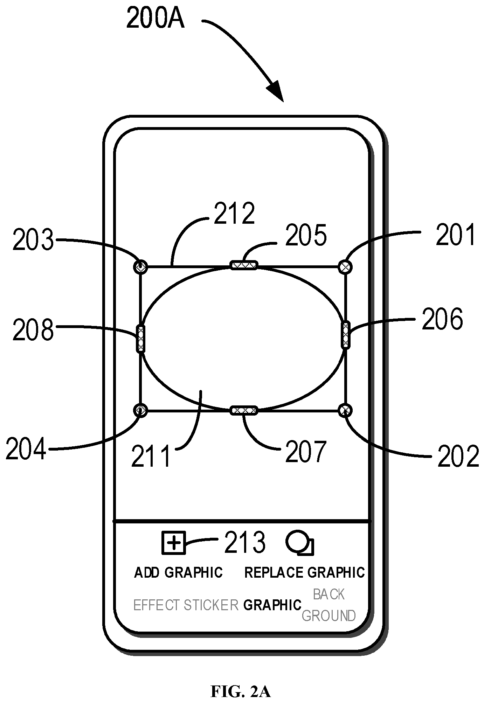

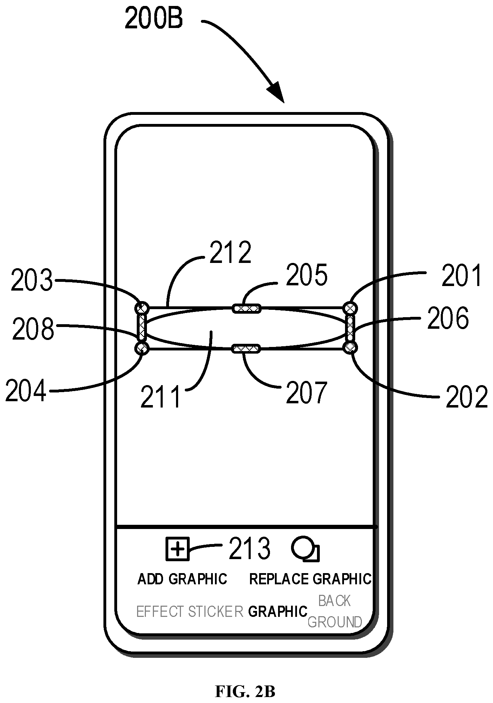

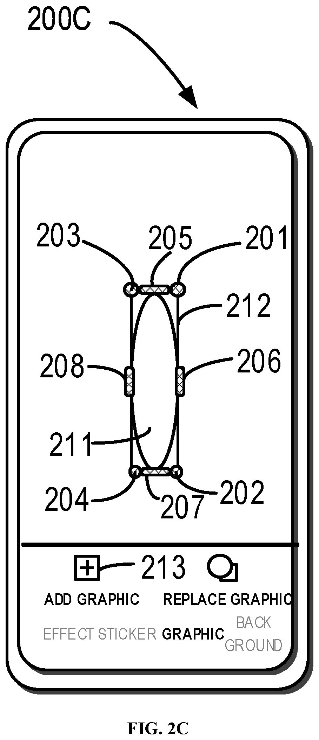

FIGS. 2A to 2C illustrate schematic diagrams of layer editing according to some embodiments of the present disclosure. The interface 200A shown in FIG. 2A, the interface 200B shown in FIG. 2B, and the interface 200C shown in FIG. 2C may be presented by the electronic device 110. For the convenience of discussion, the process shown in FIG. 2 will be described with reference to the environment 100 of FIG. 1.

As shown in FIG. 2A, the electronic device 110 presents an interface 200A for image editing. After detecting an operation of the user 102 on a control 213 (for example, adding a graphic), an initial state of a target object (for example, a graphic 211) selected and added by the user 102 may be presented on the interface 200A. The graphic 211 is in an editing box 212. A plurality of controls 201, 202, 203, 204, 205, 206, 207 and 208 for zooming the graphic 211 are presented around the editing box 212. The plurality of controls 201, 202, 203, 204, 205, 206, 207 and 208 may be understood as a set of controls associated with the target object (for example, the graphic 211). By operating these controls 201, 202, 203, 204, 205, 206, 207 and 208, the graphic 211 may be scaled proportionally or non-proportionally.

For example, if the user operates the control 201, 202, 203 or 204, the graphic 211 may be scaled proportionally, and if the user 102 operates the control 205, 206, 207 or 208, the graphic 211 may be scaled non-proportionally. As used herein, the operation on the control may include clicking, double-clicking, dragging, sliding, etc. on the control, and the scope of the present disclosure is not limited in this regard.

In some embodiments, if the user 102 scales the graphic 211 non-proportionally by operating the control 205, 206, 207 and/or 208, some of the plurality of controls 201, 202, 203, 204, 205, 206, 207 and 208 for scaling the graphic 211 are in a very close position.

For example, in the interface 200B shown in FIG. 2B, since the user 102 scales the graphic 211 non-proportionally through 205 and/or 207, the controls 203, 208 and 204 are in a very close position, and the controls 201, 206 and 202 are also in a very close position.

For another example, in the interface 200C shown in FIG. 2C, since the user 102 scales the graphic 211 non-proportionally through 206 and/or 208, the controls 203, 205 and 201 are in a very close position, and the controls 204, 207 and 202 are also in a very close position.

Each control corresponds to a respective control region, and the control region is used to indicate a range for controlling the corresponding control. When the positions of a plurality of controls are very close, the control regions corresponding to the control regions of the respective controls may overlap. In some scenarios, the control region may also be understood as a hot zone.

Although in the above and the following embodiments of the present disclosure to be described, the plurality of controls 201, 202, 203, 204, 205, 206, 207 and 208 are used to zoom the target object (for example, the graphic 211), it would be appreciated that the solution described in the present disclosure is also applicable to controls with other functions, such as a control for cropping the target object. The scope of the present disclosure is not limited in this regard.

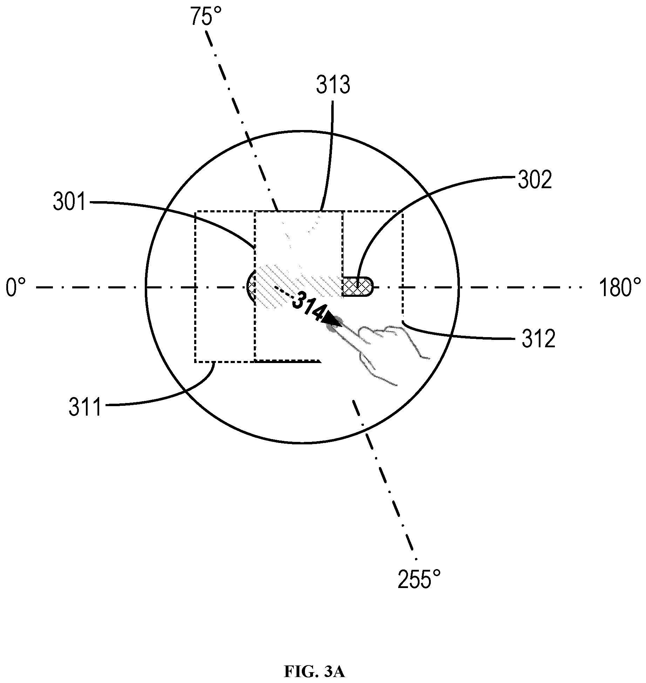

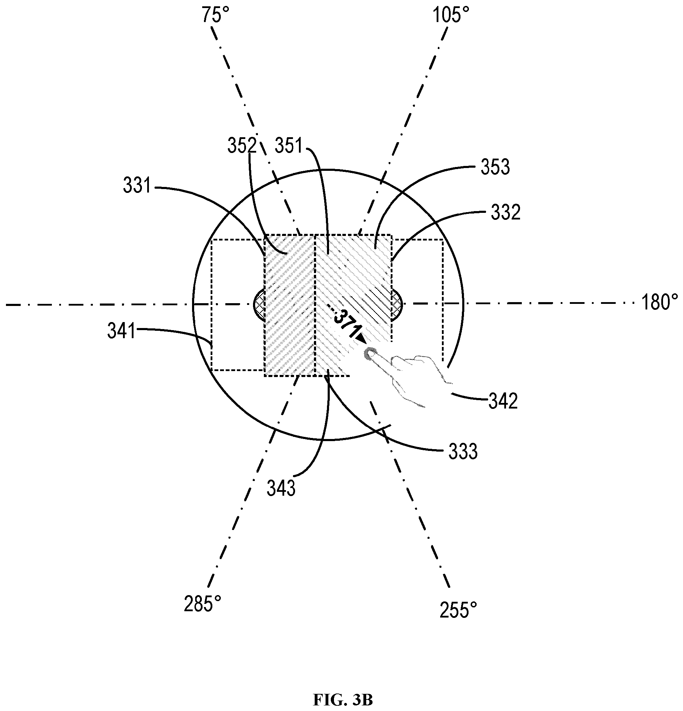

FIGS. 3A and 3B illustrate schematic diagrams of a process of interaction control according to some embodiments of the present disclosure. The process of interaction control for a plurality of controls in the case that the control regions of the plurality of controls overlap is specifically described below with reference to FIGS. 3A and 3B.

As shown in FIG. 3A, the control 301 and the control 302 are in a very close position. The control region 311 of the control 301 and the control region 312 of the control 302 overlap, that is, the control 301 and the control 302 have a common control region 313.

If the touch position of the touch input received by the electronic device 110 is within the common control region 313, the electronic device 110 determines an activated target control from the control 301 and the control 302 based on the direction information associated with the touch input.

The electronic device 110 may obtain range information indicating a plurality of angle ranges corresponding to the control 301 and the control 302. For example, the angle range corresponding to the control 301 is 0° to 75° and 180° to 255°, and the angle range corresponding to the control 302 is 75° to 180° and 255° to 0° (that is, 360°).

In some embodiments, the range information may be determined based on historical touch data. For example, the electronic device 110 obtains historical touch information, which may be generated based on a set of historical touch inputs for the plurality of controls (for example, the control 301 and the control 302). For example, the historical control information may be obtained in a process in which a tester performs one or more touches on a set of test controls. Based on the direction indicated by the historical touch information, the electronic device 110 may determine the angle range corresponding to each of the plurality of controls (for example, the control 301 and the control 302).

It would be appreciated that in the example shown in FIG. 3A, the control 301 is, for example, a proportional scaling control located in the upper left corner of the editing box, and the control 302 is, for example, a control located on the upper boundary of the editing box. Once the control 301 is, for example, a proportional scaling control located in the lower left corner of the editing box, and the control 302 is, for example, a control located on the lower boundary of the editing box, the angle range corresponding to each of the control 301 and the control 302 may change. The example shown in FIG. 3A is only intended to describe an embodiment for determining the target control, and the present disclosure is not limited in terms of the angle range corresponding to the plurality of controls involved.

If the touch position of the touch input received by the electronic device 110 is within the common control region 313 and it is determined that the direction information associated with the touch input matches a specific angle range, the electronic device 110 determines the control corresponding to the specific angle range as the target control. For example, if the electronic device 110 detects that the direction 314 associated with the touch input of the user 102 falls within an angle of 180° to 255°, the electronic device 110 determines the control 301 as the target control.

For example, the electronic device 110 may determine the direction information associated with the touch input of the user 102 based on a trajectory of the touch input within a predetermined distance range. In some embodiments, the electronic device 110 may detect an angle of a sliding trajectory within a predetermined number of pixels (for example, 8 px) that the user 102 slides, and the sliding trajectory may involve a direction determined by a line connecting from a start point to an end point, or a fitting direction associated with the sliding trajectory. In some other embodiments, the electronic device 110 may detect a sliding trajectory within a specific time period (for example, a few microseconds) after the touch input starts (the user 102 touches the interface) to determine the direction information associated with the touch input.

After the electronic device 110 determines the target control, the electronic device 110 performs an operation corresponding to the determined target control on the target object based on the touch input of the user. For example, if the control 301 is determined as the target control, the electronic device 110 performs, based on the touch input of the user 102, an operation corresponding to the control 301 on the target object, that is, performs proportional scaling on the target object.

It would be appreciated that if the touch position of the touch input received by the electronic device 110 is not within the common control region of the plurality of controls, for example, in FIG. 3A, the touch position of the touch input received by the electronic device 110 is within a region other than the common control region 313 in the control region 311 or within a region other than the common control region 313 in the control region 312, then the control 301 or the control 302 may be directly determined as the target control.

In some other embodiments, there may also be a case that the control regions of more than two controls overlap. For example, as shown in FIG. 3B, the control 331, the control 332 and the control 333 are in a very close position. The control region 341 of the control 331, the control region 342 of the control 332, and the control region 343 of the control 333 overlap, that is, the control 331, the control 332, and the control 333 have a common control region 351. In addition to the common control region 351 of the control 331, the control 332 and the control 333, the control 331 and the control 333 also have a common control region 352, and the control 332 and the control 333 also have a common control region 353.

The electronic device 110 may obtain range information indicating a plurality of angle ranges corresponding to the control 331, the control 332 and the control 333. For example, the angle range corresponding to the control 331 is 0° to 75° and 180° to 255°, the angle range corresponding to the control 332 is 105° to 180° and 285° to 0° (that is, 360°), and the angle range corresponding to the control 333 is 75° to 105° and 255° to 285°.

In some embodiments, the range information may be determined based on historical touch data. For example, the electronic device 110 obtains historical touch information, which may be generated based on a set of historical touch inputs for the plurality of controls (for example, the control 331, the control 332 and the control 333). For example, the historical control information may be obtained in a process in which a tester performs one or more touches on a set of test controls. Based on the direction indicated by the historical touch information, the electronic device 110 may determine the angle range corresponding to each of the plurality of controls (for example, the control 331, the control 332 and the control 333).

It would be appreciated that in the example shown in FIG. 3B, the control 331 is, for example, a proportional scaling control located in the upper left corner of the editing box, and the control 332 is, for example, a proportional scaling control located in the upper right corner of the editing box. Once the control 331 is, for example, a proportional scaling control located in the lower left corner of the editing box, and the control 332 is, for example, a proportional scaling control located in the lower right corner of the editing box, the angle range corresponding to each of the control 331 and the control 332 may change. The example shown in FIG. 3B is only intended to describe an embodiment for determining the target control, and the present disclosure is not limited in terms of the angle range corresponding to the plurality of controls involved.

In FIG. 3B, if the touch position of the touch input received by the electronic device 110 is within the common control region 351 of the control 331, the control 332 and the control 333, the electronic device 110 determines an activated target control from the control 331, the control 332 and the control 333 based on whether the direction information associated with the touch input matches a specific angle range.

For example, if the touch position of the touch input received by the electronic device 110 is within the common control region 351 and it is determined that the direction 371 associated with the touch input falls within an angle of 180° to 255°, the electronic device 110 determines the control 331 as the target control. The determination of the direction associated with the touch input has been described with reference to FIG. 3A, and is not repeated in this embodiment.

After the electronic device 110 determines the target control, the electronic device 110 performs an operation corresponding to the determined target control on the target object based on the touch input of the user. For example, if the control 331 is determined as the target control, the electronic device 110 performs an operation corresponding to the control 331 on the target object based on the touch input of the user, that is, performs proportional scaling on the target object.

It would be appreciated that if the touch position of the touch input received by the electronic device 110 is within the common control region of two of the three controls, for example, the touch position is within the common control region 352 of the control 331 and the control 333 or the common control region 353 of the control 332 and the control 333, the target control may be determined according to the process described with reference to FIG. 3A.

It would be appreciated that if the touch position of the touch input received by the electronic device 110 is not within the common control region of the plurality of controls, that is, neither within the common control region 351 of the control 331, the control 332 and the control 333 nor within the common control region 352 of the control 331 and the control 333 or the common control region 353 of the control 332 and the control 333, the control 331 or the control 332 or the control 333 may be directly determined as the target control based on the control region corresponding to the touch position.

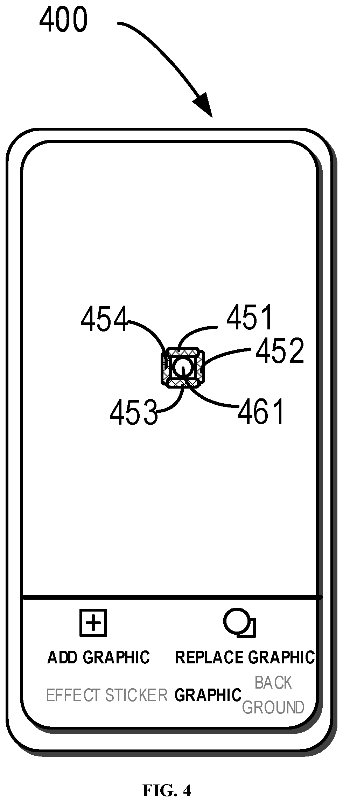

FIG. 4 illustrates a schematic diagram of layer editing according to some embodiments of the present disclosure. The interface 400 shown in FIG. 4 may be presented by the electronic device 110. For the convenience of discussion, the process shown in FIG. 4 will be described with reference to the environment 100 of FIG. 1.

In the interface 400 shown in FIG. 4, a plurality of controls 451, 452, 453 and 454 for zooming a target object (for example, a graphic 461) are presented. The plurality of controls 451, 452, 453 and 454 may be understood as a set of controls associated with the target object (for example, the graphic 461). By operating these controls 451, 452, 453 and 454, the graphic 461 may be scaled non-proportionally. In the interface 400, the controls 451, 452, 453 and 454 are in a very close position.

Similarly, each control corresponds to a respective control region, and the control region is used to indicate a range for controlling the corresponding control. When the positions of a plurality of controls are very close, the control regions corresponding to the control regions of the respective controls may overlap.

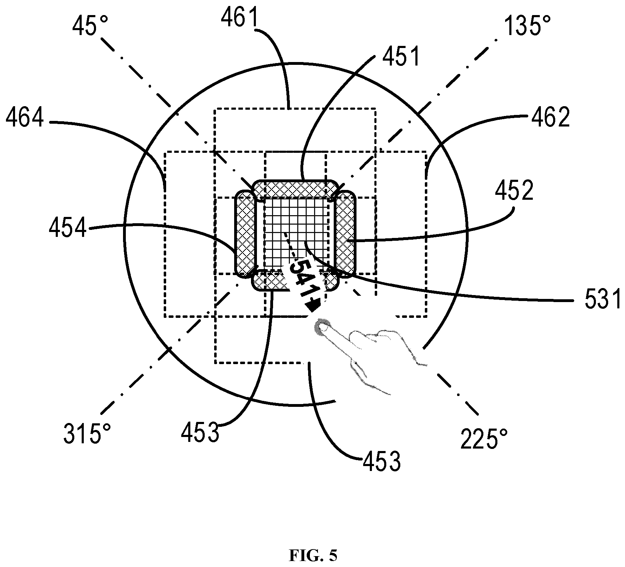

FIG. 5 illustrates a schematic diagram of a process of interaction control according to some embodiments of the present disclosure. The process of interaction control for the plurality of controls in the case that the control regions of the plurality of controls 451, 452, 453 and 454 overlap in the example shown in FIG. 4 is specifically described below with reference to FIG. 5.

As shown in FIG. 5, the control region 461 of the control 451, the control region 462 of the control 452, the control region 463 of the control 453, and the control region 464 of the control 454 have a common control region 531. The electronic device 110 may obtain range information indicating a plurality of angle ranges corresponding to the control 451, the control 452, the control 453 and the control 454. As an example, the angle range corresponding to the control 451 is 45° to 135°, the angle range corresponding to the control 452 is 135° to 225°, the angle range corresponding to the control 453 is 225° to 315°, and the angle range corresponding to the control 454 is 315° to 0° (that is, 360°).

The range information corresponding to the respective angle ranges of the controls 451, 452, 453 and 454 may be similarly determined based on historical touch data, which is not repeated here.

In FIG. 3B, if the touch position of the touch input received by the electronic device 110 is within the common control region 531 of the control 451, the control 452, the control 453 and the control 454, the electronic device 110 determines an activated target control from the control 451, the control 452, the control 453 and the control 454 based on whether the direction information associated with the touch input matches a specific angle range.

For example, if the touch position of the touch input received by the electronic device 110 is within the common control region 531 and it is determined that the direction 541 associated with the touch input falls within an angle of 225° to 315°, the electronic device 110 determines the control 453 as the target control. The determination of the direction associated with the touch input has been described with reference to FIG. 3A, and is not repeated in this embodiment.

After the electronic device 110 determines the target control, the electronic device 110 performs an operation corresponding to the determined target control on the target object based on the touch input of the user. For example, if the control 453 is determined as the target control, the electronic device 110 performs an operation corresponding to the control 453 on the target object based on the touch input of the user 102, that is, performs downward non-proportional scaling on the target object.

It would be appreciated that if the touch position of the touch input received by the electronic device 110 is within the common control region of three controls or two controls in the control 451, the control 452, the control 453 and the control 454, it may also be determined based on the direction information of the touch input and the respective angle ranges corresponding to the controls.

It would be appreciated that if the touch position of the touch input received by the electronic device 110 is not within the common control region of the plurality of controls, the control 451, the control 452, the control 453 or the control 454 may be directly determined as the target control based on the control region corresponding to the touch position.

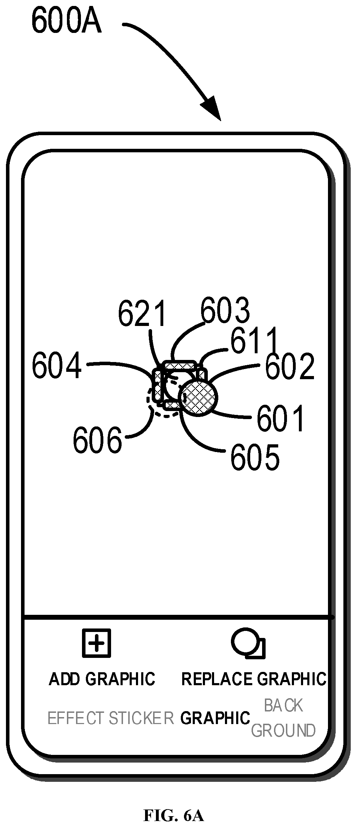

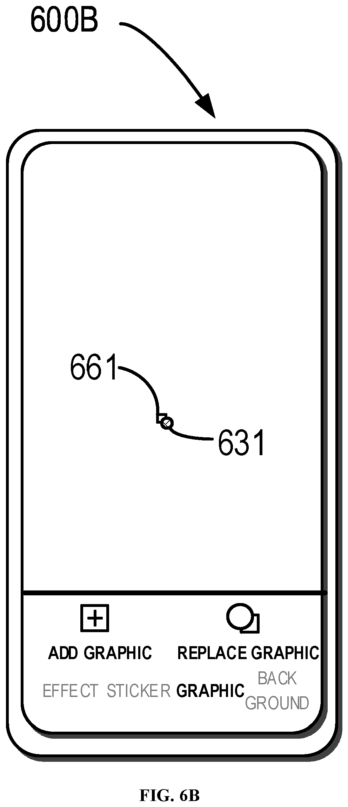

In some other scenarios, the target object may be scaled to a specific size, resulting in some controls overlapping. In order to ensure that the user may continue to perform subsequent operations on the target object, certain overlapping controls will be hidden. FIGS. 6A and 6B illustrate schematic diagrams of layer editing according to some embodiments of the present disclosure. The case where some controls are hidden is described below with reference to FIGS. 6A and 6B.

In the interface 600A shown in FIG. 6A, for example, in a process of performing a scaling operation on the target object 621, the control 601 and the control 606 for proportional scaling on the target object may overlap, and the control 606 is hidden. Other controls 602, 603, 604 and 605 for non-proportional scaling on the target object remain displayed.

It would be appreciated that although not shown, other possible proportional scaling controls may also be hidden due to overlap with the control 601. Optionally, in order to make the user operation clearer, even in the case that other possible proportional scaling controls do not overlap with the control 601, these proportional scaling controls may also be hidden. That is, in this case, only one control 601 for proportional scaling on the target object is retained.

For example, the control 601 may be determined from a plurality of controls corresponding to the proportional scaling function based on historical trigger information for the control 601. For example, the historical trigger information indicates the number of times the control 601 is used to trigger the proportional scaling function.

It would be appreciated that the retained control 601 for proportional scaling is only for illustrative purposes, and it is also possible to hide the control 601 and retain other controls for proportional scaling.

The interface 600B shown in FIG. 6B illustrates another embodiment in which control overlap occurs. In the interface 600B, it may appear that all the controls on the editing box 661 that may be used to edit the target object overlap with the control 631, and in this case, the controls other than the control 631 are all hidden.

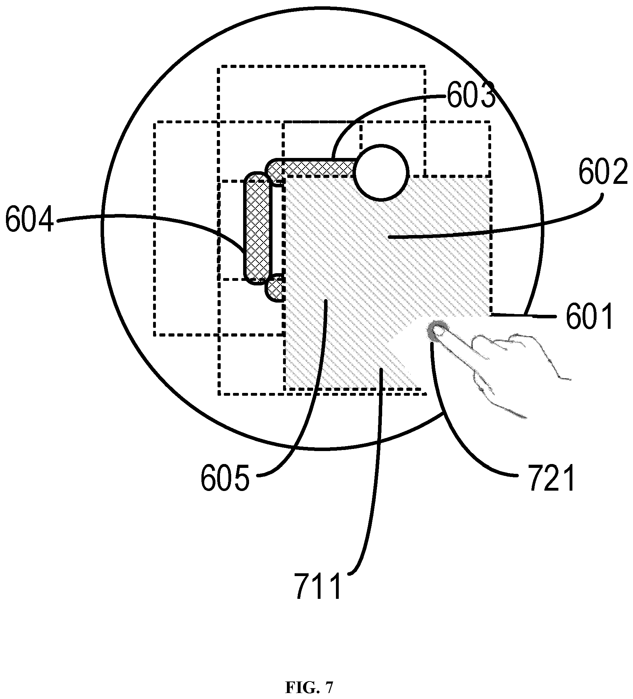

For the example shown in FIG. 6A, FIG. 7 illustrates a schematic diagram of a process of interaction control according to another embodiment of the present disclosure. Similar to the example shown in FIG. 6A, the proportional scaling controls other than the control 601 are all hidden. In this case, if the electronic device 110 detects that the touch position 721 of the touch input of the user is within the control region 711 of the control 601, the control 601 is determined as the target control. The electronic device 110 then performs an operation corresponding to the control 601. That is, in this case, the control region of the control region 711 of the control 601 is at the top, which means that the control region 711 of the control 601 is above the control regions of the controls 602, 603, 604 and 605 for non-proportional scaling on the target object. This ensures that in extreme cases, the user may first perform proportional scaling on the target object, and such a design may make the interaction operation of the interface more in line with the operation logic of the user, improving the user experience.

For the example shown in FIG. 6B, since only the space 631 exists on the interface, the electronic device 110 may understand any touch input from the user as the operation on the control 631, thereby performing the operation corresponding to the control 631 on the target object.

As described in detail in the embodiments of the present disclosure above, it may be understood that the solution of the present disclosure provides a solution for selecting a target control for a user's touch input, which may effectively avoid misoperation on the controls caused by the overlap of control regions of the controls and/or the overlap of the controls, effectively improving the accuracy and convenience of images, thereby improving the efficiency of image editing.

### Example Process

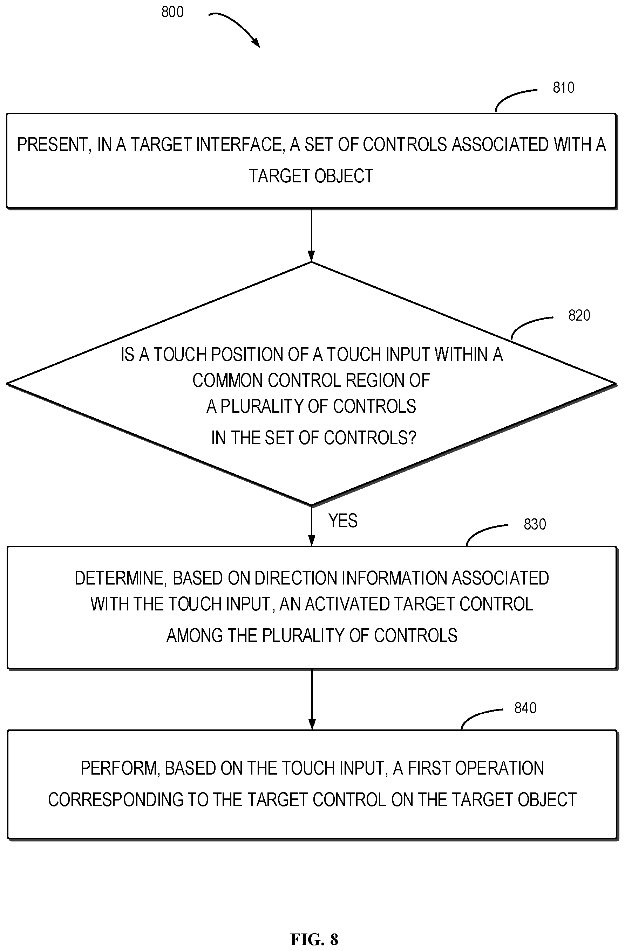

FIG. 8 illustrates a flowchart of a process 800 of interaction control according to some embodiments of the present disclosure. The process 800 may be implemented at the electronic device 110. It would be appreciated that the process 800 may also be implemented at the server 130.

At block 810, the electronic device 110 presents, in a target interface, a set of controls associated with a target object.

At block 820, if a touch position of a received touch input is within a common control region of a plurality of controls in the set of controls, the electronic device 110 determines, based on direction information associated with the touch input, an activated target control among the plurality of controls at block 830, where the control region indicates a range for controlling a corresponding control.

At block 840, the electronic device 110 performs, based on the touch input, a first operation corresponding to the target control on the target object.

In some embodiments, the electronic device 110 determines the target control corresponding to a target angle range from the plurality of controls in response to the direction information matching the target angle range.

In some embodiments, the electronic device 110 obtains range information indicating a plurality of angle ranges corresponding to the plurality of controls; and determines, based on the range information, that the direction information matches the target angle range among the plurality of angle ranges.

In some embodiments, the range information is determined based on a process described below. The electronic device 110 obtains historical touch information generated based on a set of historical touch inputs for the plurality of controls; and determines the plurality of angle ranges corresponding to the plurality of controls based on a direction indicated by the historical touch information.

In some embodiments, the electronic device 110 determines the direction information associated with the touch input based on a trajectory of the touch input within a predetermined distance range.

In some embodiments, the touch input is a first touch input and the touch position is a first touch position. The electronic device 110 receives a scaling operation for the target interface; stops displaying a second control in response to a first control in the set of controls overlapping with the second control, the first control and the second control having a corresponding target function; and performs, based on a second touch input, a second operation corresponding to the first control in response to a second touch position of the received second touch input being within a target control region of the first control.

In some embodiments, the first control is determined from a plurality of target controls corresponding to the target function based on historical trigger information for the first control, the historical trigger information indicating a number of times of using the first control to trigger the target function.

In some embodiments, the target function includes proportional scaling of the target object.

In some embodiments, the target interface includes a media editing interface and the target object includes a media element to be edited.

In some embodiments, the first operation includes a scaling operation on the media element or a cropping operation on the media element.

### Example Apparatus and Device

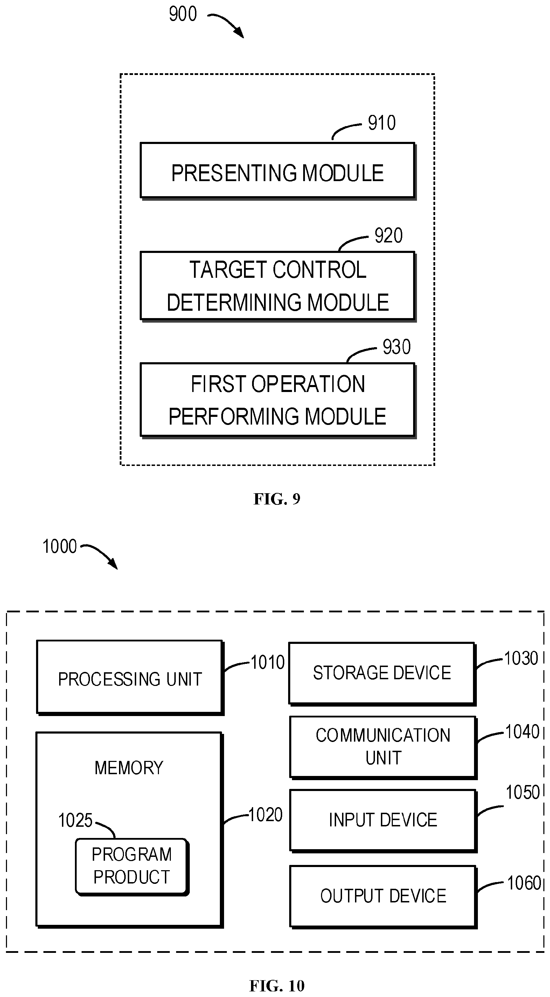

The embodiments of the present disclosure also provide corresponding apparatuses for implementing the above methods or processes. FIG. 9 illustrates a schematic structural block diagram of an apparatus 900 for data processing according to some embodiments of the present disclosure.

As shown in FIG. 9, the apparatus 900 may include a presenting module 910 configured to present, in a target interface, a set of controls associated with a target object. The apparatus 900 may further include a target control determining module 920 configured to determine, based on direction information associated with a received touch input, an activated target control among a plurality of controls in the set of controls in response to a touch position of the touch input being within a common control region of the plurality of controls, where the control region indicates a range for controlling a corresponding control. The apparatus 900 may further include a first operation performing module 930 configured to perform, based on the touch input, a first operation corresponding to the target control on the target object.

In some embodiments, the target control determining module 920 is further configured to determine the target control corresponding to a target angle range from the plurality of controls in response to the direction information matching the target angle range.

In some embodiments, the apparatus 900 further includes a range information acquisition module configured to obtain range information indicating a plurality of angle ranges corresponding to the plurality of controls; and a range matching module configured to determine, based on the range information, that the direction information matches the target angle range among the plurality of angle ranges.

In some embodiments, the range information is determined based on a process described below. Historical touch information is obtained, the historical touch information being generated based on a set of historical touch inputs for the plurality of controls; and the plurality of angle ranges corresponding to the plurality of controls are determined based on a direction indicated by the historical touch information.

In some embodiments, the apparatus 900 further includes a direction information determining module configured to determine the direction information associated with the touch input based on a trajectory of the touch input within a predetermined distance range.

In some embodiments, the touch input is a first touch input, the touch position is a first touch position, and the apparatus 900 further includes a scaling operation receiving module configured to receive a scaling operation for the target interface; a stop displaying module configured to stop displaying a second control in response to a first control in the set of controls overlapping with the second control, the first control and the second control having a corresponding target function; and a second operation execution module configured to perform, based on a second touch input, a second operation corresponding to the first control in response to a second touch position of the received second touch input being within a target control region of the first control.

In some embodiments, the first control is determined from a plurality of target controls corresponding to the target function based on historical trigger information for the first control, the historical trigger information indicating a number of times of using the first control to trigger the target function.

In some embodiments, the target function includes proportional scaling of the target object.

In some embodiments, the target interface includes a media editing interface and the target object includes a media element to be edited.

In some embodiments, the first operation includes a scaling operation on the media element or a cropping operation on the media element.

The units included in the apparatus 900 may be implemented in various ways, including software, hardware, firmware, or any combination thereof. In some embodiments, one or more units may be implemented using software and/or firmware, for example, machine executable instructions stored on a storage medium. In addition to machine executable instructions or as an alternative, some or all units in the apparatus 900 may be implemented at least partially by one or more hardware logic components. As an example, rather than a limitation, illustrative types of hardware logic components that may be used include field programmable gate array (FPGA), application specific integrated circuit (ASIC), application specific standard (ASSP), system on chip (SOC), complex programmable logic device (CPLD), etc.

FIG. 7 illustrates a block diagram of a computing device/server 1000 in which one or more embodiments of the present disclosure may be implemented. It would be appreciated that the computing device/server 1000 shown in FIG. 10 is only illustrative and should not constitute any limitation on the functionality and scope of the embodiments described herein.

As shown in FIG. 10, the computing device/server 1000 is in the form of a general computing device. Components of the computing device/server 1000 may include, but are not limited to, one or more processors or processing units 1010, a memory 1020, a storage device 1030, one or more communication units 1040, one or more input devices 1060, and one or more output devices 1060. The processing unit 1010 may be an actual or virtual processor and may perform various processes based on programs stored in the memory 1020. In a multiprocessor system, a plurality of processing units perform computer executable instructions in parallel, so as to improve the parallel processing capability of the computing device/server 1000.

The computing device/server 1000 typically includes a plurality of computer storage media. Such media may be any available media that is accessible to the computing device/server 1000, including, but not limited to, volatile and non-volatile medium, removable and non-removable medium. The memory 1020 may be volatile memory (e.g., a register, cache, a random access memory (RAM)), a non-volatile memory (e.g., a read-only memory (ROM), an electrically erasable programmable read-only memory (EEPROM), a flash memory), or any combination thereof. The storage device 1030 may be a removable or non-removable medium, and may include a machine-readable medium such as a flash drive, a magnetic disk, or any other medium, which may be used to store information and/or data (e.g., training data for training) and may be accessed within the computing device/server 1000.

The computing device/system 1000 may further include additional removable/non-removable, volatile/non-volatile storage media. Although not shown in FIG. 10, a magnetic disk drive for reading from or writing to a removable, non-volatile magnetic disk (such as a "floppy disk"), and an optical disk drive for reading from or writing to a removable, non-volatile optical disk may be provided. In these cases, each driver may be connected to a bus (not shown) by one or more data media interfaces. The memory 1020 may include a computer program product 1025 having one or more program modules configured to perform various methods or actions of various embodiments of the present disclosure.

The communication unit 1040 implements communication with other computing devices through the communication medium. In addition, the functions of the components of the computing device/server 1000 may be implemented by a single computing cluster or a plurality of computing machines, which may communicate through communication connections. Therefore, the computing device/system 1000 may operate in a networked environment using a logical connection with one or more other servers, a network personal computer (PC) or another network node.

The input device 1050 may be one or more input devices, such as a mouse, a keyboard, a trackball, etc. The output device 1060 may be one or more output devices, such as a display, a speaker, a printer, etc. The computing device/server 1000 may further communicate with one or more external devices (not shown) through the communication unit 1040 as needed, the external devices such as a storage device, a display device, etc., communicate with one or more devices that enable the user to interact with the computing device/system 1000, or communicate with any device (e. g., a network card, a modem, or the like) that enables the computing device/system 1000 to communicate with one or more other computing devices. Such communication may be performed via input/output (I/O) interfaces (not shown).

According to an illustrative implementation of the present disclosure, there is provided a computer-readable storage medium having stored thereon one or more computer instructions, where the one or more computer instructions are executed by a processor to implement the method described above.

Various aspects of the present disclosure are described herein with reference to flowcharts and/or block diagrams of methods, apparatuses (systems) and computer program products implemented according to the present disclosure. It would be understood that each block of the flowchart and/or block diagram, and combinations of blocks in the flowchart and/or block diagram, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing a function/act specified in one or more blocks of the flowchart and/or block diagram. These computer-readable program instructions may also be stored in a computer-readable storage medium, these instructions cause the computer, the programmable data processing apparatus and/or other devices to work in a specific way, and thus, the computer-readable medium storing the instructions includes a manufactured product, which includes instructions for implementing various aspects of the function/act specified in one or more blocks of the flowchart and/or block diagram.

The computer-readable program instructions may also be loaded onto a computer, another programmable data processing apparatus, or other devices, so that a series of operation steps are performed on the computer, the other programmable data processing apparatus or the other devices to produce a computer-implemented process, which makes the instructions executed on the computer, the other programmable data processing apparatus, or the other devices implement the functions/actions specified in one or more blocks of the flowchart and/or block diagram.

The flowchart and block diagram in the drawings illustrate the possibly implemented architecture, functionality and operations of the system, method and computer program product according to a plurality of implementations of the present disclosure. In this regard, each block in the flowchart or block diagram may represent a module, program segment or portion of instructions, and the module, program segment or portion of instructions include one or more executable instructions for implementing a specified logical function. In some alternative implementations, the functions marked in the blocks may also occur in a different order than those marked in the drawings. For example, two consecutive blocks may actually be executed substantially in parallel, or they may sometimes be performed in the reverse order, depending on the functions involved. It should also be noted that each block in the block diagram and/or the flowchart, and the combination of the blocks in the block diagram and/or the flowchart may be implemented using dedicated hardware-based system that performs specified functions or operations, or may be implemented by a combination of dedicated hardware and computer instructions.

Various implementations of the present disclosure have been described as above, the foregoing description is illustrative, not exhaustive, and not limited to the disclosed implementations. Without departing from the scope and spirit of the described implementations, many modifications and variations will be apparent to those of ordinary skill in the art. The selection of terms used herein is intended to best explain the principles of the implementations, the practical application or improvements of the technologies in the marketplace, or to enable those skilled in the art to understand the implementations disclosed herein.

## Claims

1. A method for interaction control, comprising:
presenting, in a target interface, a set of controls associated with a target object;
determining, based on direction information associated with a received touch input, an activated target control among a plurality of controls in the set of controls in response to a touch position of the touch input being within a common control region of the plurality of controls, wherein a control region indicates a range for controlling a corresponding control; and
performing, based on the touch input, a first operation corresponding to the target control on the target object.

2. The method of claim 1, wherein determining, based on the direction information associated with the touch input, the activated target control among the plurality of controls comprises:
determining the target control corresponding to a target angle range from the plurality of controls in response to the direction information matching the target angle range.

3. The method of claim 2, further comprising:
obtaining range information indicating a plurality of angle ranges corresponding to the plurality of controls; and
determining, based on the range information, that the direction information matches the target angle range among the plurality of angle ranges.

4. The method of claim 3, wherein the range information is determined based on a process comprising:
obtaining historical touch information, the historical touch information generated based on a set of historical touch inputs for the plurality of controls; and
determining the plurality of angle ranges corresponding to the plurality of controls based on a direction indicated by the historical touch information.

5. The method of claim 1, further comprising:
determining the direction information associated with the touch input based on a trajectory of the touch input within a predetermined distance range.

6. The method of claim 1, wherein the touch input is a first touch input and the touch position is a first touch position, and the method further comprises:
receiving a scaling operation for the target interface;
stopping displaying a second control in response to a first control in the set of controls overlapping with the second control, the first control and the second control having corresponding target functions; and
performing, based on a received second touch input, a second operation corresponding to the first control in response to a second touch position of the second touch input being within a target control region of the first control.

7. The method of claim 6, wherein the first control is determined from a plurality of target controls corresponding to the target function based on historical trigger information for the first control, the historical trigger information indicating a number of times of using the first control to trigger the target function.

8. The method of claim 6 or 7, wherein the target function comprises proportional scaling of the target object.

9. The method of claim 1, wherein the target interface comprises a media editing interface, and the target object comprises a media element to be edited.

10. The method of claim 9, wherein the first operation comprises:
a scaling operation on the media element; or
a cropping operation on the media element.

11. An apparatus for interaction control, comprising:
a presenting module configured to present, in a target interface, a set of controls associated with a target object;
a target control determining module configured to determine, based on direction information associated with a received touch input, an activated target control among a plurality of controls in the set of controls in response to a touch position of the touch input being within a common control region of the plurality of controls, wherein a control region indicates a range for controlling a corresponding control; and
a first operation performing module configured to perform, based on the touch input, a first operation corresponding to the target control on the target object.

12. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 10.

13. A computer-readable storage medium having a computer program stored thereon, when being executed by a processor, the computer program implementing the method of any of claims 1 to 10.

14. A computer program product comprising computer-executable instructions, wherein when being executed by a processor, the computer-executable instructions implement the method of any of claims 1 to 10.
